(19) Europäisches Patentamt
European Patent Office
Office européen des brevets

(11) **EP 4 753 094 A1**

(12) **EUROPEAN PATENT APPLICATION**
published in accordance with Art. 153(4) EPC

(43) Date of publication:
**03.06.2026 Bulletin 2026/23**

(51) International Patent Classification (IPC):
*H02J 3/00* (2026.01)     *H02J 3/32* (2026.01)
*H02J 3/38* (2026.01)     *H02J 13/00* (2026.01)

(21) Application number: **24859242.0**

(52) Cooperative Patent Classification (CPC):
**H02J 3/00; H02J 3/32; H02J 3/38; H02J 13/00**

(22) Date of filing: **22.07.2024**

(86) International application number:
**PCT/JP2024/026207**

(87) International publication number:
**WO 2025/047199 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.08.2023 JP 2023137771**

(71) Applicant: **Panasonic Intellectual Property
Management Co., Ltd.
Kadoma-shi, Osaka 571-0057 (JP)**

(72) Inventors:
• **BABA, Akira
  571-0057 Osaka (JP)**
• **WATANABE, Kenichi
  571-0057 Osaka (JP)**

(74) Representative: **Appelt, Christian W.
Boehmert & Boehmert
Anwaltspartnerschaft mbB
Pettenkoferstrasse 22
80336 München (DE)**

(54) **POWER MANAGEMENT SYSTEM, POWER MANAGEMENT METHOD, AND PROGRAM**

(57)     A power management system in which different unit prices are set for first purchased electricity supplied to a first electrical device and second purchased electricity supplied to a second electrical device includes: a first obtainer (for example, an obtainer (71)) that obtains, from a first meter to which a distributed energy resource and the first electrical device are electrically connected, the measured first power value of exported electricity flowing from the distributed energy resource to a power system; a second obtainer (for example, an obtainer (71)) that obtains, from a power meter electrically connected to the second electrical device, the measured second power value of imported electricity flowing from the power system; and a calculator (72) that calculates, based on the smaller one of the first power value and the second power value, at least one of the amount of electricity purchased from the power system or the amount of electricity sold to the power system.

FIG. 2

**Description**

[Technical Field]

The present invention relates to power management systems, power management methods, and programs.

[Background Art]

In a conventionally known method, a plurality of power meters are connected as a master meter and submeters, and differences are calculated to separately measure power consumption by a normal power load and power consumption by a power load subject to dynamic pricing (refer to Non Patent Literature (NPL) 1).

[Citation List]

[Non Patent Literature]

[NPL 1] Webpage of the agency for natural resources and energy under the ministry of economy, trade and industry [retrieved on August 21, 2023], <URL:https://www.enecho.meti.go.jp/category/electricity_and_gas/ electric/-measure/faq/017.html> on the Internet

[Summary of Invention]

[Technical Problem]

However, the technique disclosed in NPL 1 is problematic in that, when a distributed energy resource (non-utility generator) such as photovoltaic cells is present in facilities such as homes, electricity consumed on-site from the distributed energy resource is erroneously measured as purchased electricity. Furthermore, there may be a demand for accurate calculation of the amount of sold electricity.

Thus, the present invention provides a power management system, a power management method, and a program with which when a distributed energy resource is present in a facility, at least one of the amount of purchased electricity and the amount of sold electricity can be accurately calculated.

[Solution to Problem]

A power management system according to an aspect of the present disclosure performs management regarding electricity for a first electrical device and a second electrical device. The first electrical device is supplied with first purchased electricity, the second electrical device is supplied with second purchased electricity, and the first purchased electricity and the second purchased electricity are electricity for which different unit prices are set. The power management system includes: a first obtainer that obtains, from a first meter to which a distributed energy resource and the first electrical device are electrically connected, a first power value that is a measured value of exported electricity flowing from the distributed energy resource to a power system; a second obtainer that obtains, from a second meter electrically connected to the second electrical device, a second power value that is a measured value of imported electricity flowing from the power system; and a calculator that calculates at least one of an amount of purchased electricity or an amount of sold electricity based on a smaller power value among the first power value and the second power value, the purchased electricity being electricity purchased from the power system, the sold electricity being electricity sold to the power system.

A power management method according to an aspect of the present disclosure is for a power management system to perform management regarding electricity for a first electrical device and a second electrical device. The first electrical device is supplied with first purchased electricity, the second electrical device is supplied with second purchased electricity, and the first purchased electricity and the second purchased electricity are electricity for which different unit prices are set. The power management method includes: obtaining, from a first meter to which a distributed energy resource and the first electrical device are electrically connected, a first power value that is a measured value of exported electricity flowing from the distributed energy resource to a power system; obtaining, from a second meter electrically connected to the second electrical device, a second power value that is a measured value of imported electricity flowing from the power system; and calculating at least one of an amount of purchased electricity or an amount of sold electricity based on a smaller power value among the first power value and the second power value, the purchased electricity being electricity purchased from the power system, the sold electricity being electricity sold to the power system.

A program according to an aspect of the present disclosure is for causing a computer to perform the above-described power management method.

EP 4 753 094 A1

[Advantageous Effects of Invention]

According to an aspect of the present disclosure, a power management system or the like can be embodied that is capable of accurately calculating at least one of the amount of purchased electricity and the amount of sold electricity when a distributed energy resource is present in a facility.

[Brief Description of Drawings]

[FIG. 1]

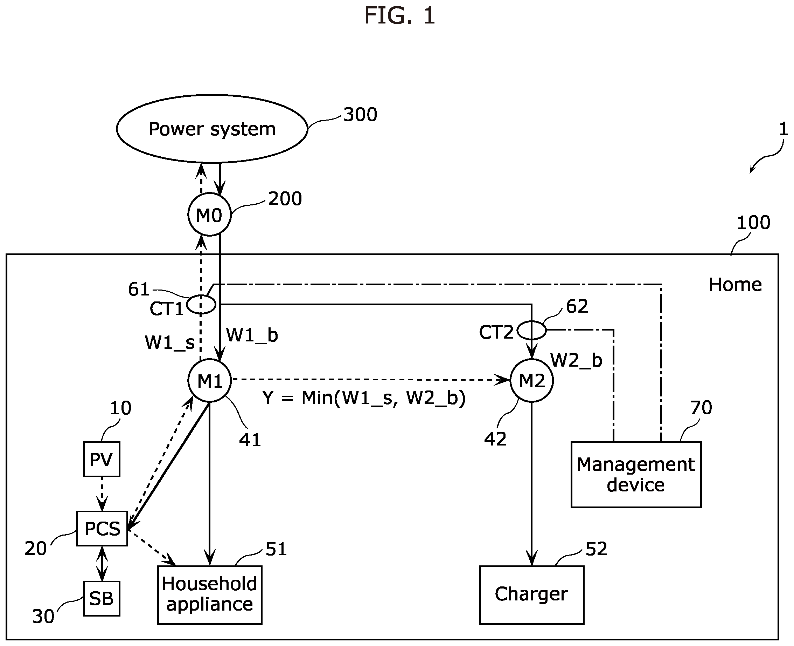

FIG. 1 is a diagram illustrating the configuration of a power management system according to an embodiment.
[FIG. 2]

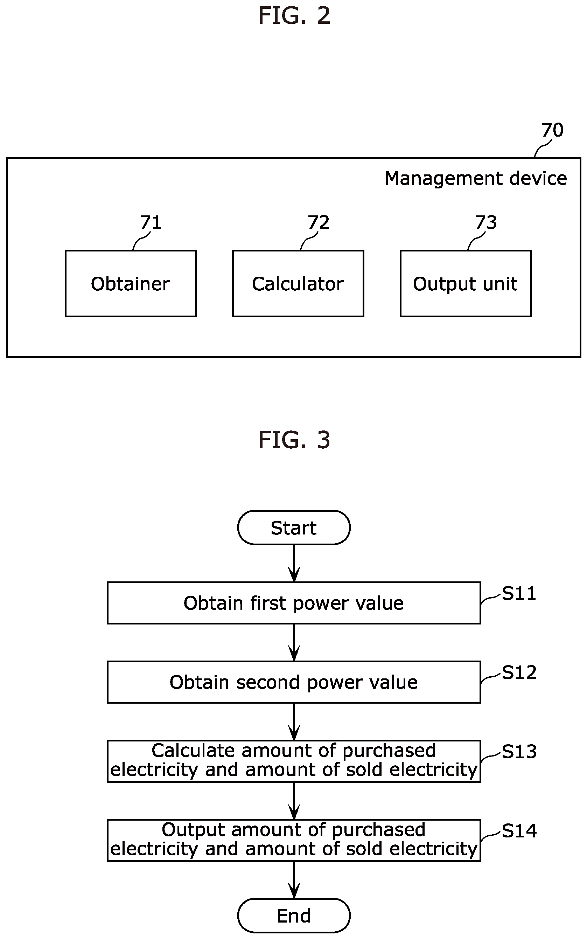

FIG. 2 is a block diagram illustrating the functional configuration of a management device according to an embodiment.
[FIG. 3]
FIG. 3 is a flowchart illustrating the operation of a management device according to an embodiment.
[FIG. 4]

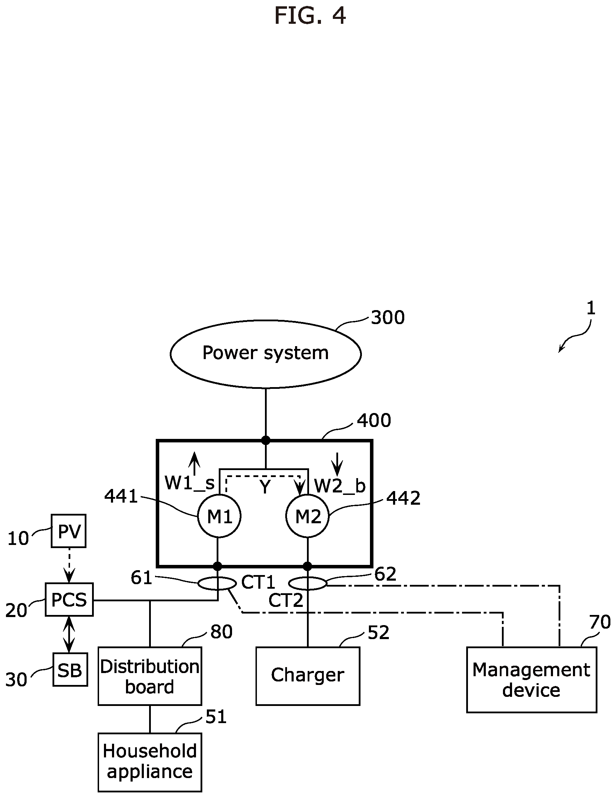

FIG. 4 is a diagram illustrating the first application example of a power management system according to an embodiment.
[FIG. 5]

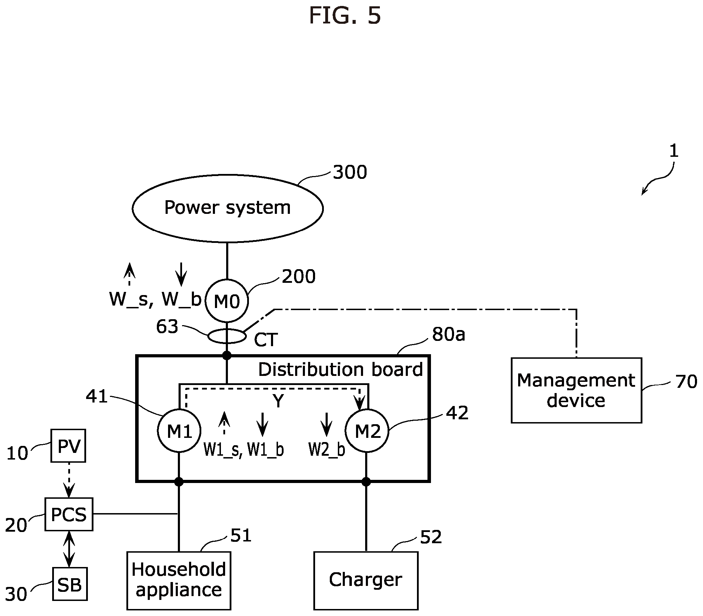

FIG. 5 is a diagram illustrating the second application example of a power management system according to an embodiment.
[FIG. 6]

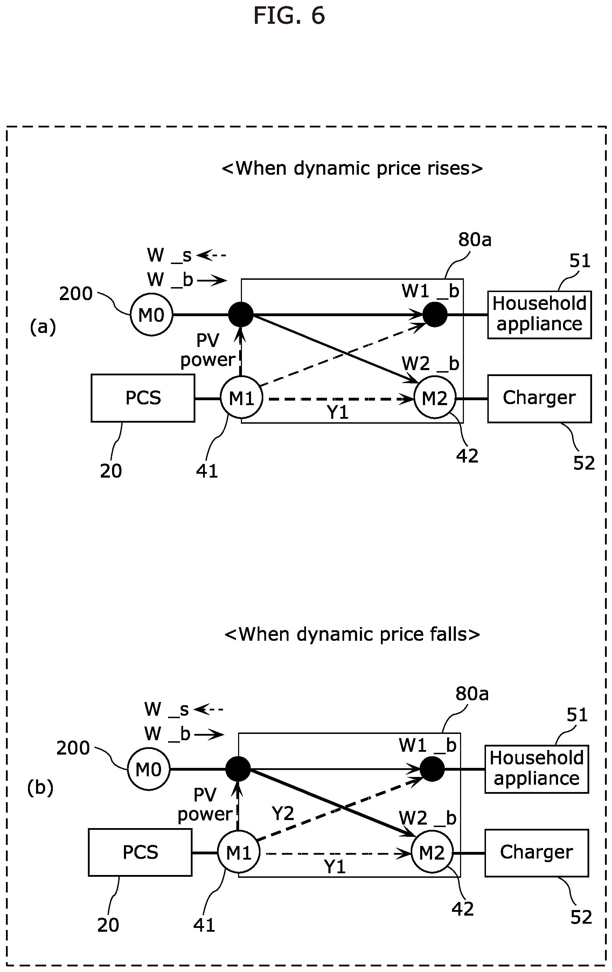

FIG. 6 is a diagram for describing a method for calculating self-consumed electricity in the second application example of a power management system according to an embodiment.
[FIG. 7]

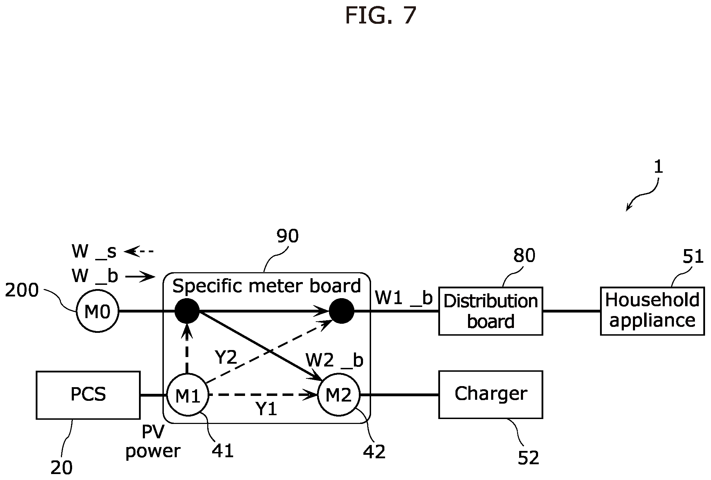

FIG. 7 is a diagram illustrating the third application example of a power management system according to an embodiment.
[FIG. 8]

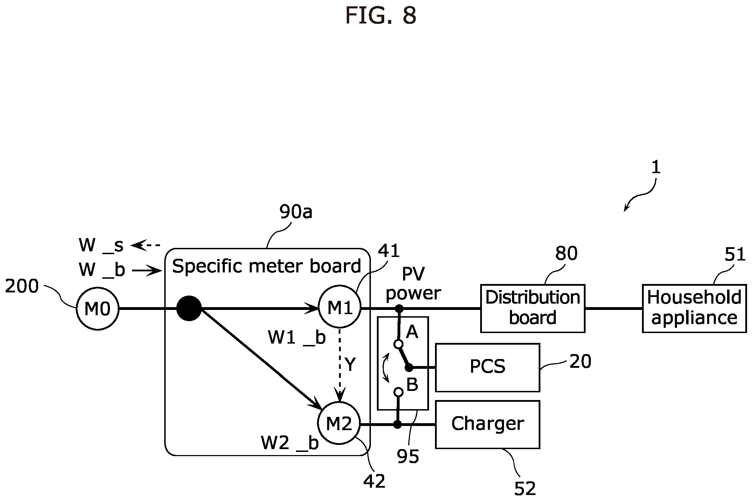

FIG. 8 is a diagram illustrating the fourth application example of a power management system according to an embodiment.
[FIG. 9]

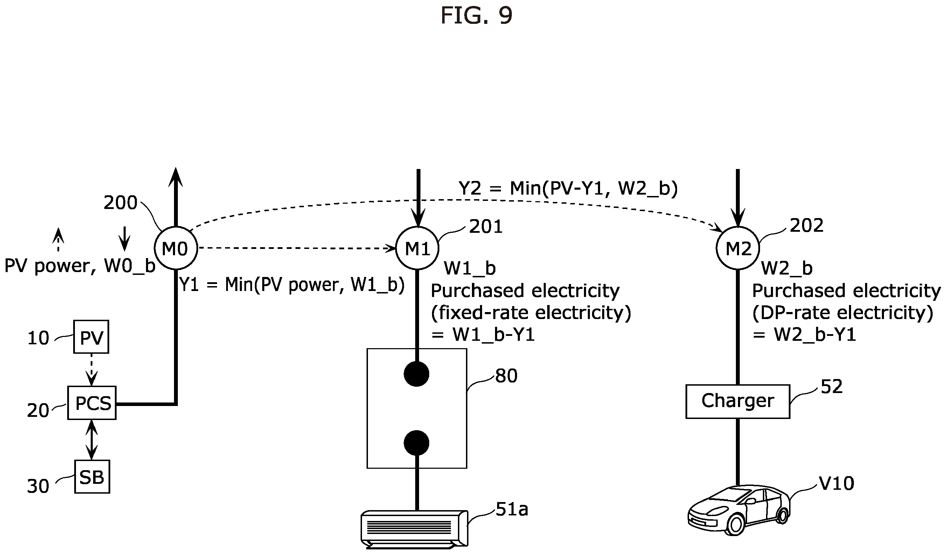

FIG. 9 is a diagram illustrating the fifth application example of a power management system according to an embodiment.
[FIG. 10]

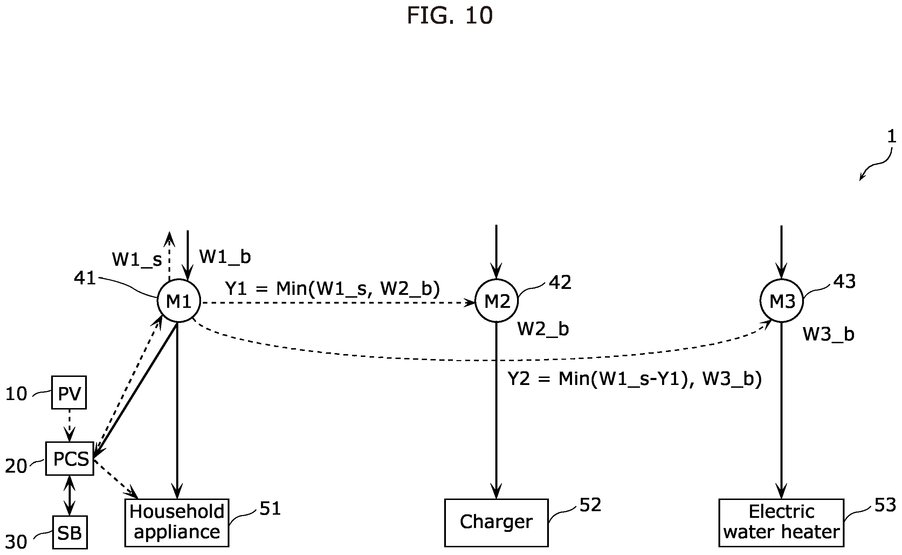

FIG. 10 is a diagram illustrating the sixth application example of a power management system according to an embodiment.
[FIG. 11]

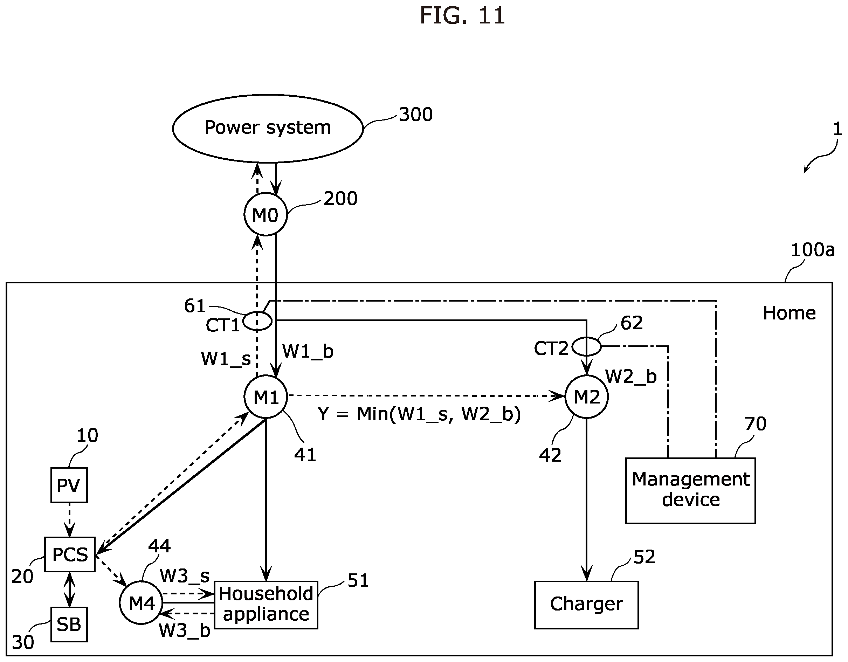

FIG. 11 is a diagram illustrating the configuration of a power management system according to a variation of an embodiment.
[FIG. 12]

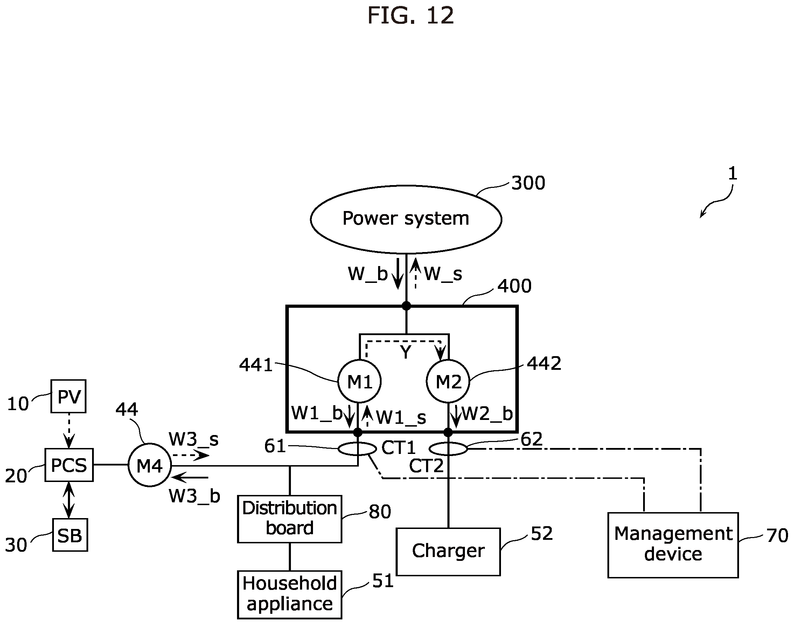

FIG. 12 is a diagram illustrating the first application example of a power management system according to a variation of an embodiment.
[FIG. 13]

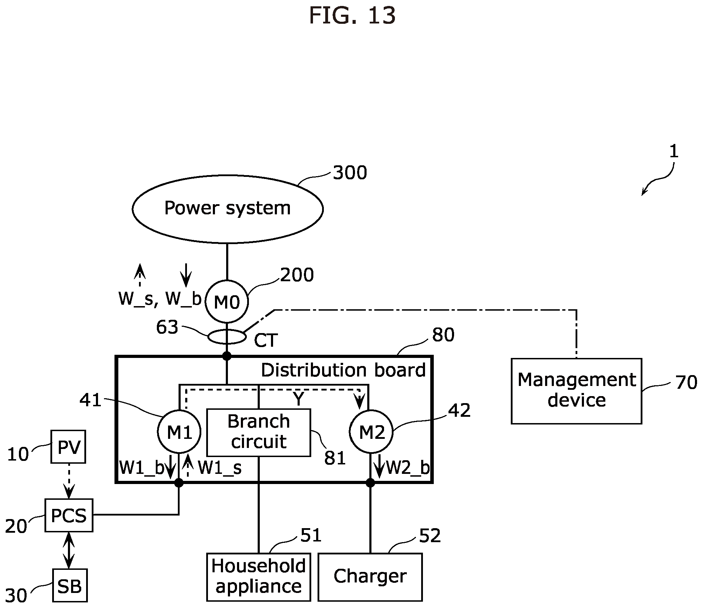

FIG. 13 is a diagram illustrating the second application example of a power management system according to a variation of an embodiment.

[Description of Embodiments]

(Circumstances Leading to the Present Invention)

Prior to the description of the present invention, the circumstances leading to the present invention will be described.

Pricing systems for electricity usage in facilities such as homes include a dynamic pricing (DP) system in which the unit price (the electricity rate) varies according to the time of day. The DP is a mechanism that flexibly adjusts prices according to demand and supply conditions. Particularly, recent years have drawn attention to a DP billing plan in which the DP-based electricity rate (DP unit price) is linked to the spot price in the electricity retail market.

However, since increasing and decreasing the real-life power demand according to changes in the DP unit price (for example, saving power during a surge) results in imposing burdens on users, it may be desirable to apply dynamic pricing only to power loads that are not directly linked to the real-life power demand such as electricity consumed by electric water heaters and electricity for charging electric vehicles while applying conventional electricity pricing systems to other power consumption. Taking electric water heaters as an example, it is sufficient that the boiling operation be performed prior to hot water usage, and the time boiling occurs does not affect users and therefore, boiling is automatically performed when the DP unit price is low, allowing for a lower electricity bill. Power loads that are directly linked to the power demand refer to power loads that consume power by user input on electrical devices (for example, turning on an air conditioner).

In this case, it is necessary to separately measure power consumption by a normal power load and power consumption by a power load subject to the DP; the method disclosed in NPL 1 has been proposed.

As described in the section "[Solution to Problem]," the method disclosed in NPL 1 is problematic in that, when a distributed energy resource is present in a facility, electricity consumed on-site from the distributed energy resource is erroneously measured as purchased electricity. For example, when electricity is supplied from a photovoltaic generation device (for example, photovoltaic cell 10 and power conversion system 20 illustrated in FIG. 1 to be described later), which is an example of the distributed energy resource, to a power load subject to the DP (that is, self-consumption), the electricity purchased according to the DP and the electricity consumed on-site are mixed and measured with the technique disclosed in NPL 1. Therefore, separate measurement of the purchased electricity and the electricity consumed on-site may be desirable when a distributed energy resource is present in a facility. Furthermore, regarding sold electricity that is variable according to the purchased electricity, accurate calculation may be desirable.

In view of this, the inventors of the present invention have conducted diligent research on a power management system and the like capable of accurately calculating at least one of the amount of purchased electricity and the amount of sold electricity, for example, distinguishing between purchased electricity and electricity consumed on-site, when a distributed energy resource is present in a facility, and thus devised the power management system and the like described below.

Hereinafter, an embodiment and the like will be specifically described with reference to the drawings.

Note that each embodiment and the like described below shows a general or specific example. The numerical values, shapes, structural elements, the arrangement and connection of the structural elements, steps, the processing order of the steps etc., shown in the following embodiment are merely examples, and are not intended to limit the present invention.

The figures are schematic diagrams and are not necessarily precise illustrations. Therefore, for example, scales, etc., of the figures are not necessarily the same. In the figures, substantially the same elements are assigned the same reference signs, and overlapping description is omitted or simplified.

In the present specification, terms indicating the relationship between elements such as being the same and the numerical values and ranges are not expressions referring to only exact meanings, but are expressions referring to substantially equivalent ranges including, for example, approximately a few percent (or approximately 10%) differences.

Furthermore, in the present specification, ordinal numbers such as "first" and "second" do not indicate the number of structural elements or the sequence of structural elements, but are used for the purpose of avoiding confusion and distinguishing between structural elements of the same kind, unless otherwise noted.

The term "connection" between structural elements refers to electrical connection and encompasses not only direct connection between two structural elements, but also indirect connection between two structural elements with another structural element inserted between the two structural elements.

[Embodiment]

Hereinafter, a power management system according to the present embodiment will be described with reference to FIG. 1 to FIG. 10.

[1. Configuration of Power Management System]

First, power management system 1 according to the present embodiment will be described with reference to FIG. 1 and FIG. 2. FIG. 1 is a diagram illustrating the configuration of power management system 1 according to the present embodiment.

As illustrated in FIG. 1, power management system 1 is a system that performs management regarding electricity for a first electrical device (for example, household appliance 51) and a second electrical device (for example, charger 52).

Power management system 1 includes photovoltaic cell 10 ("PV" illustrated in FIG. 1), power conversion system 20 ("PCS" illustrated in FIG. 1), storage battery 30 ("SB" illustrated in FIG. 1), power meters 41, 42 ("M1" and "M2" illustrated in FIG. 1), household appliance 51 and charger 52, which are power demand within home 100, current sensors 61, 62 ("CT1" and "CT2" illustrated in FIG. 1), management device 70, and power meter 200 ("M0" illustrated in FIG. 1), which are arranged in home 100, and power system 300. Each of household appliance 51 and charger 52 is an example of the electrical device that creates power demand. It is sufficient that power management system 1 include at least management device 70.

Home 100 is an example of the facility. The facility may be either a residential or non-residential facility. Examples of the residential facility include a single-family home and a condominium. Each of the plurality of units in a condominium may be regarded as "the facility," and the whole condominium may be regarded as "the facility." Examples of the non-residential facility include a store, an office building, a school, a day-care center, a shopping complex, a hospital, and a factory.

Assume that a consumer at home 100 has a contract with a retail electric provider to pay an electricity bill based on a conventional electricity pricing system for the electricity measured by power meter 41 (a fixed electricity rate) and pay an electricity bill based on a dynamic electricity pricing system (DP unit price) for the electricity measured by power meter 42. Furthermore, the contract stipulates, for example, that the retail electric provider purchases the electricity for sale measured by power meter 41 from said consumer.

Photovoltaic cell 10 is an electrical device that converts light energy into electrical energy (electricity) using the photovoltaic effect. Photovoltaic cell 10 is an example of the distributed energy resource.

Power conversion system 20, which is also referred to as a power conditioner, converts the direct-current power generated by photovoltaic cell 10 into alternating-current power. Furthermore, power conversion system 20 may obtain measurement values from current sensors 61, 62 in order to cause storage battery 30 to perform the environmentally prioritized operation described below.

Storage battery 30, which is capable of charging and discharging, is a home storage battery, for example. Storage battery 30 is capable of operating in the environmentally prioritized operation. The environmentally prioritized operation refers to an operation in which, when the electric current measured by power meter 200 has a positive sign (an imported current) (when the electricity is being purchased), storage battery 30 is discharged to reduce said electric current (to reduce the electricity to be purchased), and when the electric current measured has a negative sign (an exported current) (when the exported electricity is being sold), storage battery 30 is charged to reduce said electric current (to reduce the exported electricity to be sold). The environmentally prioritized operation refers to charging and discharging of storage battery 30 such that the electricity measured by power meter 200 approaches zero. The electric current measured by power meter 200 can be obtained, for example, based on the measurement results of current sensors 61, 62.

Power meter 41 is a power sensor that measures the electricity supplied to household appliance 51 (power value W1_b illustrated in FIG. 1). Power meter 41 measures, for example, the imported electricity supplied from power system 300 to household appliance 51 (in other words, the electricity purchased based on a conventional electricity pricing system). When the electricity generated by photovoltaic cell 10 (PV power) is not provided (not supplied) to household appliance 51, power meter 41 measures only the imported electricity supplied from power system 300 to household appliance 51 (imported electricity = power value W1_b). This imported electricity (hereinafter also referred to as the purchased electricity) is the electricity subject to billing for calculating an electricity bill based on a conventional electricity pricing system.

Part or the whole of the PV power generated by photovoltaic cell 10 is sold to power system 300 (a retail electric provider) or the like via power meter 41. For example, power meter 41 also measures the electricity to be sold (power value W1_s illustrated in FIG. 1). Power meter 41 is electrically connected to each of photovoltaic cell 10 and household appliance 51. Power meter 41 may be a conventional (analog) power meter or may be what is called a smart meter. The smart meter refers to a power meter with communication capabilities that measures power consumption at an interval (for example, every 30 minutes) shorter than that of a conventional meter. Power meter 41 is an example of the first meter.

Power meter 42 is a power sensor that measures the electricity supplied to charger 52 (power value W2_b illustrated in FIG. 1). Power meter 42 measures, for example, the imported electricity supplied from power system 300 to charger 52 (in other words, the electricity purchased based on a dynamic electricity pricing system). When the PV power generated by photovoltaic cell 10 is not provided (not supplied) to charger 52, power meter 42 measures only the imported electricity supplied from power system 300 to charger 52 (imported electricity = power value W2_b). When the PV power generated by photovoltaic cell 10 is provided (supplied) to charger 52, power meter 42 measures the total of the imported electricity supplied from power system 300 to charger 52 and self-consumed electricity Y (imported electricity + self-consumed electricity Y = power value W2_b). The imported electricity (hereinafter also referred to as the purchased electricity) is the electricity subject to billing for calculating an electricity bill based on a dynamic electricity pricing system. Note that power meter 42 cannot separately measure the imported electricity and self-consumed electricity Y.

Power meter 42 is electrically connected to power meter 200 and charger 52. For example, power meter 42 is connected only to charger 52. Being connected only to charger 52 is being connected so that only the electricity supplied to charger 52 can be measured; for example, this means being connected to charger 52 without other power meters interposed therebetween. Power meter 42 may be a conventional power meter or may be what is called a smart meter. Power meter 42 is an example of the second meter.

Household appliance 51 is an electrical device that is installed in home 100 and consumes electricity. Household appliance 51, which is a device that creates power demand, is an example of the first electrical device. It is sufficient that the first electrical device be a power load that is directly linked to the real-life power demand; the first electrical device is, for example, a household appliance such as an air conditioner, a refrigerator, or a television set, but examples of the first electrical device may include other electrical devices than household appliance 51.

The first electrical device is subject to a conventional electricity pricing system, that is, a fixed electricity rate to which dynamic pricing is not applied. The fixed electricity rate, which is a price per unit that does not change depending on electricity demand and supply, etc., is set in advance, for example, at the time of signing a contract.

Charger 52 is charging equipment (or charging/discharging equipment) that charges the storage battery of a vehicle powered by electricity such as an electric vehicle (EV) or a plug-in hybrid electric vehicle (PHEV); charger 52 is an example of the second electrical device. The second electrical device, which is a power load that is not directly linked to the real-life electricity demand, may be an electric water heater or the like, for example. The second electrical device is subject to the DP unit price.

In this manner, different electricity rates (unit prices) are set for the purchased electricity supplied to the first electrical device (the first purchased electricity) and the purchased electricity supplied to the second electrical device (the second purchased electricity). Note that the respective numbers of first electrical devices and second electrical devices included in power management system 1 are not particularly limited; it is sufficient that power management system 1 include at least one first electrical device and at least one second electrical device. Note that an electricity rate different from the DP unit price may be applied to the electricity rate for the second electrical device. It is sufficient that the electricity rate for the second electrical device be an electricity rate different from the electricity rate for the first electrical device; for example, the electricity rate for the second electrical device may be another fixed electricity rate or the like different from the fixed electricity rate for the first electrical device.

Current sensors 61, 62 measure the electric current flowing through a predetermined point. Each of current sensors 61, 62 includes, for example, a current transformer and a current ammeter connected to the current transformer. Current sensors 61, 62 are disposed on the distribution lines between a distribution board in home 100 and power meter 200.

Current sensor 61, which is installed on a wire dedicated to home 100 between power meters 41, 200, measures the electric current flowing through said wire (the exported current). This means that current sensor 61 measures the electric current that is output from home 100 to power system 300.

Current sensor 62, which is installed on a wire dedicated to home 100 between power meters 42, 200, measures the electric current flowing through said wire (the imported current). This means that current sensor 62 measures the electric current flowing to charger 52 (the imported current).

Note that power management system 1 may include one current sensor (for example, current sensor 63 illustrated in FIG. 5 to be described later) at a power-receiving point instead of current sensors 61, 62. This one current sensor measures the electric current flowing through the power-receiving point. Specifically, this one current sensor measures the electric current flowing from the power-receiving point toward home 100 (on the downstream side) and the electric current flowing from home 100 toward the power-receiving point (on the upstream side). Including this current sensor in power management system 1 allows home 100 to satisfy the conditions for utilizing a feed-in tariff (FIT) scheme (a fixed-price purchase scheme).

Note that the current value measured by at least one of power meters 41, 42, 200 can substitute for the current values measured by current sensors 61, 62. For example, the current value of the exported electricity measured by power meter 41 or 200 can substitute for the current value measured by current sensor 61. Furthermore, for example, the current value of the imported electricity measured by power meter 42 can substitute for the current value measured by current sensor 62. Therefore, for example, when the current value measured by at least one of power meters 41, 42, 200 is output to management device 70, at least one (for example, both) of current sensors 61, 62 does not need to be provided.

Management device 70 performs management regarding electricity for the first electrical device and the second electrical device. For example, management device 70 performs various processes for providing part or the whole of the electricity generated by photovoltaic cell 10 to charger 52. Management device 70 may be installed in home 100 or may be provided remotely from home 100. Management device 70 may be provided on a control terminal for controlling household appliance 51 installed in home 100 or may be realized using a server device connected to the meters and the sensors to allow communication therebetween, for example.

FIG. 2 is a block diagram illustrating the functional configuration of management device 70 according to the present embodiment.

As illustrated in FIG. 2, management device 70 includes obtainer 71, calculator 72, and output unit 73. The structural elements of management device 70 are realized, for example, by a microcomputer, a processor (hardware), or the like included in management device 70 executing a computer program (software) stored in storage (not illustrated in the drawings).

Obtainer 71 obtains the measured power values from various meters. Obtainer 71 obtains, from power meter 41, measured power value W1_s (an example of the first power value) of the exported electricity flowing from photovoltaic cell 10 to power system 300. Obtainer 71 functions as the first obtainer. Furthermore, obtainer 71 obtains, from power meter 42, measured power value $W2\_b$ (an example of the second power value) of the imported electricity flowing from power system 300. Obtainer 71 functions as the second obtainer. Furthermore, obtainer 71 obtains, from power meter 41, measured power value $W1\_b$ of the imported electricity flowing from power system 300 to household appliance 51. Note that the unit of each of power values $W1\_s$, $W1\_b$, $W2\_b$ is, for example, the "watt (W)."

Obtainer 71 may include a communication module (a communication circuit) for communicating with power meters 41, 42. Obtainer 71 may perform communication via a wired connection or may perform communication via a wireless connection. The communication standard to be used for communication is not particularly limited. Furthermore, obtainer 71 is not limited to directly communicating with power meters 41, 42 and may obtain, via another device, the power values measured by power meters 41, 42. Moreover, obtainer 71 may be connected to an input device such as a button, a touch panel, or a sound pickup device (for example, a microphone) to obtain the power values without relying on a communication network.

On the basis of power values $W1\_s$, $W2\_b$ obtained, calculator 72 calculates the amount of electricity purchased by home 100 from power system 300 and the amount of electricity sold by home 100 to power system 300. Specifically, calculator 72 calculates the amount of purchased electricity and the amount of sold electricity on the basis of the smaller one of power values $W1\_s$, $W2\_b$. Calculator 72 calculates the smaller power value as self-consumed electricity Y (the first self-consumed electricity) provided from photovoltaic cell 10 to charger 52, calculates purchased electricity and sold electricity by subtracting self-consumed electricity Y from power values $W1\_s$, $W2\_b$, and accumulates the calculated purchased electricity and the calculated sold electricity, for example, thereby calculating the amount of purchased electricity and the amount of sold electricity.

When the smaller one of power values $W1\_s$, $W2\_b$ is power value $W1\_s$, for example, all power values $W1\_s$ are used as self-consumed electricity Y (= power value $W1\_s$) for charger 52, and electricity is purchased from power system 300 to make up for the shortage. In this case, the sold electricity is zero. In contrast, when the smaller one of power values $W1\_s$, $W2\_b$ is power value $W2\_b$, for example, power value $W2\_b$ out of power value $W1\_s$ is used as self-consumed electricity Y (= power value $W2\_b$) for charger 52, and surplus electricity is sold to power system 300 or provided to household appliance 51. In this case, the purchased electricity for charger 52 is zero.

Mathematical expressions representing the purchased electricity and the sold electricity are as follows.

$$\text{Purchased electricity for charger 52} = W2\_b - Y \ [W] \quad \text{(Expression 1)}$$

$$\text{Sold electricity} = W1\_s - Y \ [W] \quad \text{(Expression 2)}$$

$$\text{Self-consumed electricity } Y = \text{Min}(W1\_s, W2\_b) \ [W] \quad \text{(Expression 3)}$$

$$\text{Purchased electricity for household appliance 51} = W1\_b \ [W] \quad \text{(Expression 4)}$$

The electricity calculated using Expression 1 is the electricity subject to the DP unit price, and the electricity calculated using Expression 4 is the electricity subject to the fixed electricity rate. The purchased electricity for household appliance 51 refers to the electricity subject to billing based on a conventional fixed electricity rate. The purchased electricity for charger 52 refers to the electricity subject to billing based on the DP unit price.

Furthermore, in power management system 1, a power supply route is controlled such that self-consumed electricity Y calculated by calculator 72 is actually supplied to charger 52.

Self-consumed electricity Y described above corresponds to the PV power from photovoltaic cell 10 to be consumed on-site by charger 52. By calculating the purchased electricity for charger 52 using Expressions 1 and 3 above, calculator 72 can separate the electricity measured by power meter 42 into the electricity purchased from power system 300 and the electricity consumed on-site by charger 52.

It is sufficient that calculator 72 calculate at least one of the amount of purchased electricity and the amount of sold electricity.

Output unit 73 outputs, to an external device (for example, an upper-level system), the amount of purchased electricity and the amount of sold electricity calculated by calculator 72. For example, output unit 73 outputs the amount of purchased electricity and the amount of sold electricity to a server device managed by a retail electric provider. Output unit 73 outputs, as the amount of electricity subject to billing based on the DP unit price, an amount of purchased electricity obtained by accumulating the purchased electricity calculated using Expression 1 for a predetermined period, and outputs, as the amount of electricity subject to billing based on the conventional fixed electricity rate, an amount of purchased electricity obtained by accumulating the purchased electricity calculated using Expression 4 for a predetermined period. In this manner, in the example of FIG. 1, output unit 73 outputs, as the amount of purchased electricity subject to billing based on the DP unit price, the amount of electricity obtained by accumulating the electricity calculated by subtracting self-consumed electricity Y from the electricity measured by power meter 42, instead of the amount of electricity directly obtained by accumulating the electricity measured by power meter 42.

Output unit 73, which outputs the amount of purchased electricity and the amount of sold electricity via a wireless connection, for example, may output the amount of purchased electricity and the amount of sold electricity via a wired connection. Furthermore, output unit 73 may output the amount of purchased electricity and the amount of sold electricity to a terminal device of the consumer.

Referring back to FIG. 1, power meter 200 is a power sensor that is connected between each of power meters 41, 42 and power system 300 and measures at least one of the third power value (power value $W\_b$ illustrated in FIG. 5 to be described later) of the imported electricity flowing from power system 300 and the fourth power value (power value $W\_s$ illustrated in FIG. 5 to be described later) of the exported electricity flowing from photovoltaic cell 10 to power system 300. Power meter 200 measures, for example, the electricity supplied from one of a retail electric provider and a power-receiving point to the other (specially, the electricity supplied (purchased) from power system 300 to home 100 and the electricity sold from home 100 to power system 300). In this manner, power meter 200 functions as at least one of a power meter for receiving electricity that measures the electricity supplied from power system 300 and a power meter for selling electricity that measures the exported electricity sold from home 100 to a retail electric provider for a predetermined unit price by using the FIT scheme. Power meter 200 is an example of the third meter.

The power-receiving point at which power meter 200 is installed may be a demarcation point or the like between the range of home 100 and the range of power system 300 or may be a position where a service entrance switchgear (low pressure) or power-receiving equipment (high pressure) is disposed.

Note that the retail electric provider is a business operator that trades electricity based on the measurement values from power meter 200. The retail electric provider sells electricity to typical households, buildings, factories, and the like. The measurement values from power meter 200 are transmitted to the retail electric provider.

Power system 300, which is a system managed by the retail electric provider, includes a system power supply.

[2. Operation of Power Management System]

FIG. 3 is a flowchart illustrating the operation (the power management method) of management device 70 according to the present embodiment. Steps S11, S12 are performed before electricity is provided for self-consumption.

As illustrated in FIG. 3, obtainer 71 of management device 70 obtains, from power meter 41, the measured first power value of the exported electricity flowing from the distributed energy resource to power system 300 (S11). In Step S11, obtainer 71 obtains power value $W1\_s$.

Next, obtainer 71 obtains the measured second power value of the imported electricity from power meter 42 (S12). In Step S12, obtainer 71 obtains power value $W2\_b$.

Note that the timing of obtaining the first power value, the timing of obtaining the second power value, and the order of obtaining these power values are not particularly limited. The first power value and the second power value may be obtained at the same time.

Next, on the basis of the smaller one of the first power value and the second power value, calculator 72 calculates the amount of electricity purchased from power system 300 and the amount of electricity sold to power system 300 (S13). Calculator 72 calculates the amount of purchased electricity and the amount of sold electricity using Expressions 1 to 3 above.

Next, output unit 73 outputs, to an external device, the amount of purchased electricity and the amount of sold electricity calculated by calculator 72 (S14). This makes it possible, for example, to calculate a charge for purchased electricity and a charge for sold electricity based on the accurate amount of purchased electricity and the accurate amount of sold electricity.

[3. Application Examples of Power Management System]

Hereinafter, application examples of power management system 1 according to the present embodiment will be described with reference to FIG. 4 to FIG. 10. First, the first application example will be described with reference to FIG. 4. FIG. 4 is a diagram illustrating the first application example of power management system 1 according to the present embodiment. With reference to FIG. 4, an example in which each of power meters 441, 442 is a smart meter will be described. Power meter 441, which corresponds to power meter 41 illustrated in FIG. 1, is an example of the first meter. Power meter 442, which corresponds to power meter 42 illustrated in FIG. 1, is an example of the second meter. Furthermore, current sensor 61 is disposed on the downstream side of power meter 441, and current sensor 62 is disposed on the downstream side of power meter 442. Power meters 441, 442 are integrated, for example, within housing 400.

Note that for the sake of convenience, management device 70, home 100, etc., are omitted from the illustrations in FIG. 4 onward.

As illustrated in FIG. 4, power meter 441, which is a smart meter, is disposed between power system 300 and household appliance 51, and power meter 442, which is a smart meter, is disposed between power system 300 and charger 52. Each of power meters 441, 442 is disposed at the demarcation point or the like between the range of home 100 and the range of power system 300; in the present application example, the electricity for self-consumption is provided on the upstream side of each of power meters 441, 442.

In this case, calculator 72 calculates, as self-consumed electricity Y provided from the distributed energy resource to the second electrical device, the smaller one of the first power value (power value W1_s) of the exported electricity obtained from power meter 441 and the second power value (power value W2_b) of the imported electricity obtained from power meter 442. Furthermore, calculator 72 calculates the amount of purchased electricity and the amount of sold electricity by subtracting self-consumed electricity Y from the first power value and the second power value. Note that the electricity for self-consumption may be provided via a power transmission and distribution network maintained and operated by a general power transmission and distribution specialist.

Next, the second application example will be described with reference to FIG. 5 and FIG. 6. FIG. 5 is a diagram illustrating the second application example of power management system 1 according to the present embodiment. FIG. 5 illustrates an example where each of power meters 41, 42 is not a smart meter, but a conventional power meter, and power meter 200 is disposed at the demarcation point. Power meter 200 may be a smart meter or may be a conventional power meter. Each of power meters 41, 42 may be a meter (a specific meter) that is not subject to verification under a measurement act, under certain conditions. Obtainer 71, which is connected to power meter 200 to allow communication therebetween, obtains the measurement values from power meter 200.

As illustrated in FIG. 5, power meters 41, 42 are disposed on distribution board 80a to which household appliance 51 and charger 52 are connected, and power meter 200 is connected between distribution board 80a and power system 300. In the present application example, power meter 200 measures at least the third power value (that is, power value W_b of the electricity purchased by home 100 from power system 300 (the imported electricity)). Furthermore, power meters 41, 42 may be capable of measuring electricity at an interval of a few milliseconds. Moreover, current sensor 63 is disposed between power meter 200 and distribution board 80a.

In this case, calculator 72 calculates electricity using Expressions 5 and 6 below.

Purchased electricity for household appliance 51 (the first purchased electricity) = W_b - (W2_b - Y) [W] (Expression 5)             (Expression 5)

Purchased electricity for charger 52 (the second purchased electricity) = W2_b - Y [W] (Expression 6)             (Expression 6)

Note that the expression for calculating self-consumed electricity Y, which is the same as Expression 3, is omitted from the description.

In Expression 6, (W2_b - Y) represents the second power value of the imported electricity flowing from power system 300 to charger 52 (the electricity purchased from power system 300). Self-consumed electricity Y can be provided on the downstream side of power meter 200 disposed at the demarcation point. For example, wiring within home 100 can be used to provide self-consumed electricity Y. Self-consumed electricity Y is the on-site electricity available for consumption within home 100. In other words, in power management system 1 according to the present application example, electricity can be provided for self-consumption without using a power transmission and distribution network maintained and operated by a general power transmission and distribution specialist.

Calculator 72 calculates the first purchased electricity by subtracting the second power value from the third power value (power value W_b), as indicated in Expression 5.

Furthermore, calculator 72 may calculate the entire load electricity (power consumption) of home 100 using Expression 7 below and calculate load electricity (power consumption) of devices in home 100 other than charger 52 using Expression 8 below. The devices other than charger 52 refer to all the devices that are subject to the fixed electricity rate (in other words, all the devices that are not subject to the DP unit price) among the devices installed in home 100.

Entire power consumption of home 100 = W_b + PV power - W_s (Expression 7)             (Expression 7)

Power consumption of all devices in home 100 other than charger 52 = W_b + PV power - W_s - W2_b (Expression 8)    (Expression 8)

Furthermore, calculator 72 may switch, according to the electricity rate for the second purchased electricity, the method for calculating self-consumed electricity Y. Switching the method for calculating self-consumed electricity Y will be described with reference to FIG. 6. FIG. 6 is a diagram for describing the method for calculating self-consumed electricity Y in the second application example of power management system 1 according to the present embodiment. In FIG. 6, (a) is a diagram for describing the method for calculating self-consumed electricity Y when the dynamic price rises, and (b) is a diagram for describing the method for calculating self-consumed electricity Y when the dynamic price falls. Note that in FIG. 6, the connection relationship within distribution board 80a is different from that in FIG. 5. For example, household appliance 51 is connected so that the electricity from power system 300 can be supplied thereto without power meter 41 interposed therebetween.

Th rise of the dynamic price means, for example, that the DP unit price is higher than or equal to the fixed electricity rate (an example of the predetermined unit price), and the fall of the dynamic price means, for example, that the DP unit price is lower than the fixed electricity rate (an example of the predetermined unit price). Note that the predetermined unit price is not limited to the fixed electricity rate and may be another unit price that has been set in advance. The predetermined unit price for determining the price rise and the predetermined unit price for determining the price fall may be the same or different. The predetermined unit prices are stored, for example, in the storage of management device 70. Obtainer 71 may obtain the DP unit price from a server device or the like that manages the DP unit price.

Calculator 72 determines whether the DP unit price is higher than or equal to the predetermined unit price, and according to the determination result, makes the calculation method in Step S13 illustrated in FIG. 3 different.

As illustrated in (a) in FIG. 6, when the DP unit price rises, self-consumed electricity Y1 is preferentially provided to charger 52. In this case, the PV power generated by photovoltaic cell 10 is managed to avoid charging storage battery 30 and be instead provided as much as possible to charger 52 subject to the DP unit price. Calculator 72 calculates electricity using Expressions 9 to 11 below.

$$\text{Self-consumed electricity } Y1 = \text{Min}(PV \text{ power}, W2\_b) \text{ [W]}$$
$$\text{(Expression 9)}$$

Purchased electricity for charger 52 (the second purchased electricity) = W2_b - Y1 [W] (Expression 10)    (Expression 10)

Purchased electricity for household appliance 51 (the first purchased electricity) = W_b - (W2_b - Y1) [W] (Expression 11)    (Expression 11)

Self-consumed electricity Y1, which is part of the PV power that is provided to charger 52, is an example of the first self-consumed electricity.

In this manner, when the electricity rate (the DP unit price) for the second purchased electricity is higher than or equal to the predetermined unit price, calculator 72 calculates the smaller one of the PV power and power value W2_b as self-consumed electricity Y1.

As illustrated in (b) in FIG. 6, when the DP unit price falls, self-consumed electricity Y2 (an example of the second self-consumed electricity) is preferentially provided to household appliance 51. In this case, the PV power generated by photovoltaic cell 10 is managed to be provided as much as possible to household appliance 51 subject to the fixed electricity. Calculator 72 calculates self-consumed electricity using Expressions 12 and 13 below.

$$\text{Self-consumed electricity } Y2 = \text{Min}(PV \text{ power}, W1\_b) \text{ [W]}$$
$$\text{(Expression 12)}$$

$$\text{Self-consumed electricity } Y1 = PV \text{ power} - W\_s - Y2 \text{ [W]}$$
$$\text{(Expression 13)}$$

Note that the purchased electricity for charger 52 (the second purchased electricity) and the purchased electricity for household appliance 51 (the first purchased electricity) can be calculated by substituting self-consumed electricity Y1 in Expression 13 for self-consumed electricity Y1 in Expressions 10 and 11. Power value W1_b can be obtained from the measurement values from power meters 41, 42, 200.

Note that when the DP unit price falls, electricity for self-consumption does not need to be provided to charger 52. This means that self-consumed electricity Y1 may be zero. For example, (PV power - Y2) and power value W_s indicated in Expression 13 may have the same value.

In this manner, when the electricity rate (the DP unit price) for the second purchased electricity is lower than the predetermined unit price, calculator 72 calculates, as self-consumed electricity Y1, the power value lower than self-consumed electricity Y1 calculated using Expression 9 (the power value calculated using Expression 13). When the electricity rate for the second purchased electricity is lower than the predetermined unit price, calculator 72 may set self-consumed electricity Y1 to 0 or calculate self-consumed electricity Y1 on the basis of self-consumed electricity Y2 provided from photovoltaic cell 10 to household appliance 51.

Next, the third application example will be described with reference to FIG. 7. FIG. 7 is a diagram illustrating the third application example of power management system 1 according to the present embodiment. FIG. 7 illustrates an example where specific meter board 90 is installed.

As illustrated in FIG. 7, power management system 1 further includes specific meter board 90 incorporating power meters 41, 42, which are specific meters. Specific meter board 90 is connected between power meter 200 and distribution board 80 to which household appliance 51 is connected. It can also be said that power meter 200 is connected between power system 300 and specific meter board 90. Furthermore, specific meter board 90 is connected between power conversion system 20 (in other words, photovoltaic cell 10) and charger 52. Note that power meters 41, 42 are not installed on distribution board 80.

The purchased electricity from power meter 200 (the purchased electricity from power system 300) can be supplied to household appliance 51 via distribution board 80 and supplied to charger 52 via power meter 42. The PV power can be sold and can be supplied to household appliance 51 and charger 52 via power meter 41.

For example, specific meter board 90 is a box-shaped unit installed as dedicated hardware different from distribution board 80 and is configured to be able to switch between selling the PV power from photovoltaic cell 10 via power meter 200, supplying the PV power from photovoltaic cell 10 to charger 52 via power meter 42, and supplying the PV power from photovoltaic cell 10 to household appliance 51 via distribution board 80. Specific meter board 90 is a 2-input/2-output specific meter board.

Thus, a destination to which the PV power from photovoltaic cell 10 is supplied is determined on specific meter board 90 (in other words, hardware), meaning that the measurement values from power meters 41, 42 have improved credibility.

Note that when specific meter board 90 is installed, the method for calculating self-consumed electricity Y1, Y2 may be changed depending on whether the DP unit price is high or low. In this case, management device 70 can dynamically change the calculation method.

Next, the fourth application example will be described with reference to FIG. 8. FIG. 8 is a diagram illustrating the fourth application example of power management system 1 according to the present embodiment. FIG. 8 illustrates an example where switch 95 is installed in addition to specific meter board 90a.

As illustrated in FIG. 8, power management system 1 includes, in addition to specific meter board 90a incorporating power meters 41, 42, which are specific power meters, switch 95 that switches between connecting power conversion system 20 (in other words, photovoltaic cell 10) to household appliance 51 via power meter 41 and distribution board 80 and connecting power conversion system 20 to power meter 42 and charger 52. Switch 95 is a physical switch that includes one movable contact and two fixed contacts (fixed contacts A, B), but may be, for example, a touch switch or the like. Fixed contact A is connected to power meter 41 and connected to household appliance 51 via distribution board 80, and fixed contact B is connected to power meter 42 and charger 52.

Switch 95 is controlled so that the connection destination thereof is switched according to whether the DP unit price is higher than or equal to the predetermined unit price. When the DP unit price is higher than or equal to the first predetermined unit price, switch 95 connects the movable contact to fixed contact B, and when the DP unit price is lower than the second predetermined unit price lower than or equal to the first predetermined unit price (for example, when the DP unit price is lower than the first predetermined unit price), switch 95 connects the movable contact to fixed contact A. This allows for a reduction in the amount of purchased electricity that is purchased from power system 300.

In this case, switch 95 is dynamically switched according to the DP unit price, but the method for calculating self-consumed electricity Y is fixed (for example, Expression 6). When the movable contact and fixed contact A are connected, power meter 41 measures surplus electricity as power value W1_s by subtracting, from the PV power, the electricity supplied to household appliance 51. When the movable contact and fixed contact B are connected, power meter 42 measures surplus electricity as power value W1_s by subtracting, from the PV power, the electricity supplied to charger 52.

Self-consumed electricity Y can be calculated using Expression 3 using power value W1_s of the exported electricity measured by power meter 41 and power value W2_b of the imported electricity measured by power meter 42.

Note that the control of switch 95 and the determination on whether the DP unit price is higher than or equal to the predetermined unit price may be performed by management device 70 or may be performed by another device.

Next, the fifth application example will be described with reference to FIG. 9. FIG. 9 is a diagram illustrating the fifth application example of power management system 1 according to the present embodiment. FIG. 9 illustrates an example where the electricity for self-consumption is provided on the upstream side of power meters 200, 201, 202, which are smart meters. Note that in FIG. 9, air conditioner 51a, which is an example of household appliance 51, and electric vehicle V10 connected to charger 52 are illustrated.

As illustrated in FIG. 9, power management system 1 includes power meters 200, 201, 202. Power meters 200, 201, 202 are smart meters. One or two of power meters 200, 201, 202 may be positioned remotely from home 100. For example, power meter 200 may be disposed in home 100, and power meters 201, 202 may be disposed at different locations remote from home 100. Power meter 201 is an example of the first meter, and power meter 202 is an example of the second meter.

With this configuration, when electricity is provided for self-consumption, the electricity for self-consumption is provided on the upstream side of power meters 200, 201, 202. The electricity for self-consumption may be provided, for example, via a power transmission and distribution network maintained and operated by a general power transmission and distribution specialist.

Calculator 72 calculates self-consumed electricity that is the PV power provided to at least one of household appliance 51 and charger 52. Management device 70 may sell the entire amount of electricity without providing the PV power for self-consumption. The following will describe providing electricity for self-consumption to household appliance 51 and charger 52. Assume that the DP unit price falls. In this case, calculator 72 determines that the electricity is to be preferentially provided to household appliance 51.

Calculator 72 first calculates self-consumed electricity Y1 for household appliance 51, and when the PV power is greater than W1_b, further calculates self-consumed electricity Y2 for charger 52. Calculator 72 calculates self-consumed electricity Y1 and self-consumed electricity Y2 according to Expressions 14 and 15 below.

$$\text{Self-consumed electricity Y1 = Min(PV power, W1\_b) [W]}$$
$$\text{(Expression 14)}$$

$$\text{Self-consumed electricity Y2 = Min(PV power} - \text{Y1, W2\_b) [W]}$$
$$\text{(Expression 15)}$$

Furthermore, calculator 72 calculates the sold electricity and the purchased electricity (the electricity subject to billing) in this case according to Expressions 16 to 18 below.

$$\text{Sold electricity = PV power} - \text{Y1} - \text{Y2 [W]} \quad \text{(Expression 16)}$$

Purchased electricity for household appliance 51 = W1_b - Y1 [W] (Expression 17)    (Expression 17)

$$\text{Purchased electricity for charger 52 = W2\_b} - \text{Y2 [W]}$$
$$\text{(Expression 18)}$$

Thus, when the electricity for self-consumption is provided on the upstream side of power meters 41, 42, for example, the purchased electricity involving site-to-site wheeling can be calculated in a three-supply-site contract.

Next, the sixth application example will be described with reference to FIG. 10. FIG. 10 is a diagram illustrating the sixth application example of power management system 1 according to the present embodiment. FIG. 10 illustrates an example where devices within home 100 are subject to different DP unit prices.

As illustrated in FIG. 10, power management system 1 includes household appliance 51, charger 52, and electric water heater 53 as electrical devices. Household appliance 51 is a device subject to the fixed electricity rate. Charger 52 and electric water heater 53, each of which is subject to the DP unit price, are subject to different DP unit prices. The DP unit price for charger 52 is denoted as a first DP unit price, and the DP unit price for electric water heater 53 is denoted as a second DP unit price. The first DP unit price and the second DP unit price vary according to the time of day, meaning that the first DP unit price is high at a time of day and the second DP unit price is high at a time of day. In the present application example, a destination to which the PV power is provided for self-consumption (the order of self-consumption priority) changes dynamically according to which of the first DP unit price and the second DP unit price is higher or lower. The following description will focus on the case where the first DP unit price is higher than the second DP unit price (that is, the case where charger 52 has priority over electric water heater 53).

Furthermore, power management system 1 includes power meter 43 ("M3" illustrated in FIG. 10) in addition to power meters 41, 42. Power meter 43 measures the imported electricity (the purchased electricity) flowing from power system 300 to electric water heater 53. Obtainer 71 of management device 70 is configured to be able to obtain power value W3_b measured by power meter 43.

In this case, calculator 72 first calculates self-consumed electricity Y1 for charger 52 with high self-consumption priority. Calculator 72 calculates self-consumed electricity Y1, for example, using Expression 3. Next, when power value W2_b is smaller than power value W1_s, calculator 72 further calculates self-consumed electricity Y2 for electric water heater 53 using Expression 19 below.

$$\text{Self-consumed electricity Y2} = \text{Min}((\text{W1\_s} - \text{Y1}), \text{W3\_b}) \text{ [W]}$$
(Expression 19)

Note that when the second DP unit price is higher than the first DP unit price, calculator 72 calculates self-consumed electricity Y1, Y2 using Expressions 20 and 21 below.

$$\text{Self-consumed electricity Y2} = \text{Min}(\text{W1\_s}, \text{W3\_b}) \text{ [W]}$$
(Expression 20)

$$\text{Self-consumed electricity Y1} = \text{Min}((\text{W1\_s} - \text{Y2}), \text{W2\_b}) \text{ [W]}$$
(Expression 21)

Thus, even when home 100 includes devices subject to different DP unit prices, the purchased electricity (the electricity resulting from subtracting the self-consumed electricity) for each of the devices can be calculated.

Note that when the first DP unit price and the second DP unit price are the same price, the PV power may be preferentially provided to a preset device out of charger 52 and electric water heater 53.

Note that the electricity for self-consumption may be provided through wiring within home 100 or may be provided via a power transmission and distribution network maintained and operated by a general power transmission and distribution specialist.

[Variations of Embodiment]

Hereinafter, power management system 1 according to the present variation will be described with reference to FIG. 11 to FIG. 13. Note that the following description will focus on the differences from the embodiment, omitting or simplifying the description of details that are the same as or similar to those in the embodiment.

FIG. 11 is a diagram illustrating the configuration of power management system 1 according to the present variation. The present variation will describe the case where a power purchase agreement (PPA) operator has installed photovoltaic cell 10 in home 100a. The PPA operator sells, to the consumer at home 100a, the electricity (PV power) generated by photovoltaic cell 10. Furthermore, when the PPA operator installs storage battery 30 in home 100a and household appliance 51 is supplied with the electricity discharged from storage battery 30, the PPA operator sells the electricity to the consumer at home 100a. Note that a retail electric provider may operate the PPA business.

As illustrated in FIG. 11, power management system 1 includes power meter 44 ("M4" illustrated in FIG. 11) in addition to those in power management system 1 illustrated in FIG. 1.

Power meter 44, which is connected between power conversion system 20 and household appliance 51, measures power value W3_s of the electricity supplied from the PPA operator to household appliance 51 and power value W3_b of the electricity purchased from a retail electric provider. It can also be said that power meter 44 measures the electricity supplied from one of photovoltaic cell 10 (an example of the distributed energy resource) installed by the PPA operator and household appliance 51 (an example of the first electrical device) to the other. Power meter 44 may be a conventional power meter or may be a smart meter. Power meter 44 is an example of the fourth meter.

Obtainer 71 of management device 70 functions as the third obtainer that obtains power values W3_s and W3_b from power meter 44.

Calculator 72 calculates, using Expressions 22 to 25 below, the electricity purchased by the consumer at home 100a.

Electricity purchased for household appliance 51 from retail electric provider = W1_b - W3_b [W] (Expression 22)     (Expression 22)

Electricity purchased for household appliance 51 from PPA operator = W3_s [W] (Expression 23)     (Expression 23)

Electricity purchased for charger 52 from retail electric provider = W2_b - Y [W] (Expression 24)     (Expression 24)

Electricity purchased for charger 52 from PPA operator = Y [W] (Expression 25)

Furthermore, calculator 72 calculates, using Expressions 26 to 29 below, the electricity sold by the PPA operator to the consumer, the electricity purchased by the PPA operator from the retail electric provider, and the electricity sold by the PPA operator to the retail electric provider. Note that Expression 29 is an expression for calculating the electricity purchased for household appliance 51 by the PPA operator from the retail electric provider.

Electricity sold by PPA operator for household appliance 51 = W3_s - W1_s [W] (Expression 26)     (Expression 26)

Electricity sold by PPA operator for charger 52 = Y [W] (Expression 27)

Electricity sold to retail electric provider = W1_s – Y [W] (Expression 28)

Electricity purchased from retail electric provider = W3_b [W] (Expression 29)

Next, an application example of power management system 1 according to the present variation will be described. The following will describe, with reference to FIG. 12, an example where power management system 1 according to the present variation is applied to the first application example among the application examples of the embodiment, and the following will describe, with reference to FIG. 13, an example where power management system 1 according to the present variation is applied to the second application example among the application examples of the embodiment. FIG. 12 and FIG. 13 are diagrams illustrating application examples of power management system 1 according to the present variation. Note that power management system 1 according to the present variation can be applied to any of the application examples of the embodiment.

As illustrated in FIG. 12, power management system 1 according to the present variation includes power meter 44 in addition to those in power management system 1 illustrated in FIG. 4 according to the embodiment.

Power meter 44 is connected between power conversion system 20 and each of power meter 441 and distribution board 80.

Even in this power management system 1, calculator 72 can calculate various types of electricity using Expressions 22 to 29 above.

As illustrated in FIG. 13, power management system 1 according to the present variation is configured such that household appliance 51 in power management system 1 illustrated in FIG. 5 according to the embodiment is connected via branch circuit 81. In this case, there is no need to include power meter 44.

In this case, calculator 72 calculates, using Expressions 30 and 31 below, the electricity purchased by the consumer at home 100a.

Electricity purchased for household appliance 51 from retail electric provider = W_b - W1_b - W2_b [W] (Expression 30)     (Expression 30)

Electricity purchased for household appliance 51 from PPA operator = W1_b - Y - W_s [W] (Expression 31)     (Expression 31)

Note that the electricity purchased for charger 52 from the retail electric provider and the electricity purchased for charger 52 from the PPA operator can be calculated using Expressions 24 and 25, the description of which will be omitted.

Furthermore, using Expressions 32 to 34 below, calculator 72 calculates the electricity sold by the PPA operator to the consumer, the electricity purchased by the PPA operator from the retail electric provider, and the electricity sold by the PPA operator to the retail electric provider.

Electricity sold by PPA operator for household appliance 51 = W1_b - Y - W_s [W] (Expression 32)     (Expression 32)

$$\text{Electricity sold to retail electric provider} = W\_s \ [W] \quad (\text{Expression 33})$$

$$\text{Electricity purchased from retail electric provider} = W1\_b \ [W] \quad (\text{Expression 34})$$

Note that the electricity sold by the PPA operator for charger 52 can be calculated using Expression 27, the description of which will be omitted.

Even in this power management system 1, calculator 72 can calculate various types of electricity using Expressions 24, 25, 27, and 30 to 34 above.

[Advantageous Effects, etc.]

The inventions derived from the disclosure of the present specification and the advantageous effects, etc., obtained by said inventions will be described below.

[Invention 1]

Power management system 1 that performs management regarding electricity for a first electrical device (for example, household appliance 51) and a second electrical device (for example, charger 52) where different unit prices are set for first purchased electricity supplied to the first electrical device and second purchased electricity supplied to the second electrical device includes: a first obtainer (for example, obtainer 71) that obtains, from a first meter (for example, power meter 41) to which a distributed energy resource (for example, photovoltaic cell 10) and the first electrical device are electrically connected, a first power value (for example, power value W1_s or PV power) that is a measured value of exported electricity flowing from the distributed energy resource to power system 300; a second obtainer (for example, obtainer 71) that obtains, from a second meter (for example, power meter 42) electrically connected to the second electrical device, a second power value (for example, power value W2_b) that is a measured value of imported electricity flowing from power system 300; and calculator 72 that calculates at least one of an amount of purchased electricity or an amount of sold electricity based on a smaller power value among the first power value and the second power value, the purchased electricity being electricity purchased from power system 300, the sold electricity being electricity sold to power system 300.

Thus, in power management system 1, when electricity for self-consumption is provided to the second electrical device and electricity is sold to power system 300 by using the smaller power value that is a power value based on the exported electricity, the use of the smaller power value makes is possible to reduce the effects the electricity consumed on-site by the second electrical device has on at least one of the measured amount of purchased electricity and the measured amount of sold electricity. Therefore, when a distributed energy resource is present in a facility (for example, within home 100), power management system 1 can accurately calculate at least one of the amount of purchased electricity and the amount of sold electricity.

[Invention 2]

In power management system 1 according to Invention 1, calculator 72 calculates the smaller power value as first self-consumed electricity that is provided from the distributed energy resource to the second electrical device, and subtracts the first self-consumed electricity from the first power value and the second power value to calculate at least one of the amount of purchased electricity or the amount of sold electricity.

Thus, since the first self-consumed electricity is subtracted from the second power value, the second power value can be separated into the first self-consumed electricity that is consumed on-site by the second electrical device and the amount of electricity purchased from power system 300. Accordingly, at least one of the amount of purchased electricity and the amount of sold electricity can be accurately calculated.

[Invention 3]

In power management system 1 according to Invention 2, calculator 72 switches, according to an electricity rate for the second purchased electricity, a method for calculating the first self-consumed electricity.

As a result, the charge for electricity purchased from power system 300 can be reduced, allowing for reduced financial burden for electricity purchase on the consumer who owns power management system 1.

[Invention 4]

In power management system 1 according to Invention 3, when the electricity rate for the second purchased electricity is higher than or equal to a predetermined unit price, calculator 72 calculates the smaller power value as the first self-consumed electricity, and when the electricity rate for the second purchased electricity is lower than the predetermined unit price, calculator 72 calculates a power value less than the smaller power value as the first self-consumed electricity.

As a result, the first self-consumed electricity increases when the electricity rate is high, and the first self-consumed electricity decreases when the electricity rate is low; thus, the financial burden for electricity purchase on the consumer who owns power management system 1 can be effectively reduced.

[Invention 5]

In power management system 1 according to Invention 4, when the electricity rate for the second purchased electricity is lower than the predetermined unit price, calculator 72 sets the first self-consumed electricity to zero or calculates the first self-consumed electricity based on second self-consumed electricity that is provided from the distributed energy resource to the first electrical device.

As a result, when the electricity rate for the second purchased electricity is lower than the predetermined unit price, electricity is preferentially provided to the first electrical device and thus, the amount of purchased electricity for the first electrical device can be reduced. Thus, even when the electricity rate for the second purchased electricity is low, the financial burden for electricity purchase on the consumer can be reduced.

[Invention 6]

Power management system 1 according to any one of Inventions 1 to 5 further includes the first meter and the second meter, and each of the first meter and the second meter is a smart meter.

Thus, when each of the first meter and the second meter is a smart meter, the amount of purchased electricity and the amount of sold electricity can be accurately calculated.

[Invention 7]

Power management system 1 according to any one of Inventions 2 to 5 further includes: the first meter; the second meter; and a third meter (for example, power meter 200) that is connected between power system 300 and each of the first meter and the second meter and measures at least one of a third power value of imported electricity flowing from power system 300 or a fourth power value of exported electricity flowing from the distributed energy resource to power system 300. The first meter and the second meter are provided on distribution board 80a to which the first electrical device and the second electrical device are connected. The third meter is connected between distribution board 80a and power system 300.

Thus, when the first meter and the second meter are provided on distribution board 80a, the amount of purchased electricity and the amount of sold electricity can be accurately calculated.

[Invention 8]

In power management system 1 according to Invention 7, the third meter measures at least the third power value, and calculator 72 calculates the first purchased electricity by subtracting the second power value from the third power value.
Thus, calculator 72 can easily calculate the first purchased electricity.

[Invention 9]

Power management system 1 according to any one of Inventions 1 to 8 further includes: the first meter; the second meter; a third meter that is connected between power system 300 and each of the first meter and the second meter and measures a third power value of imported electricity flowing from power system 300; and specific meter board 90 to which the distributed energy resource and the second electrical device are connected and that is connected between the third meter and distribution board 80 to which the first electrical device is connected. The first meter and the second meter are provided on specific meter board 90. The third meter is connected between specific meter board 90 and power system 300.
With this, it is clarified that electricity is supplied only to a device connected to specific meter board 90 and thus, uncertainty regarding the calculation of an amount of electricity can be reduced.

[Invention 10]

Power management system 1 according to Invention 9 further includes switch 95 that switches between connecting the distributed energy resource to the first meter and the first electrical device and connecting the distributed energy resource to the second meter and the second electrical device.
Thus, the physical switch changes the connection, allowing for a further reduction in uncertainty regarding the calculation of an amount of electricity.

[Invention 11]

In power management system 1 according to Invention 10, when an electricity rate for the second purchased electricity is higher than or equal to a predetermined unit price, switch 95 connects the distributed energy resource to the first meter and the first electrical device, and when the electricity rate for the second purchased electricity is lower than the predetermined unit price, switch 95 connects the distributed energy resource to the second meter and the second electrical device.
Thus, switch 95 can be used to reduce the financial burden for electricity purchase on the consumer who owns power management system 1.

[Invention 12]

In power management system 1 according to any one of Inventions 1 to 11, an electricity rate for the first purchased electricity is a fixed electricity rate that is set in advance, and an electricity rate for the second purchased electricity is an electricity rate based on dynamic pricing.
As a result, when different unit prices are a fixed electricity rate and an electricity rate based on dynamic pricing, the amount of purchased electricity and the amount of sold electricity can be accurately calculated.

[Invention 13]

In power management system 1 according to any one of Inventions 1 to 12, the first electrical device includes household appliance 51, and the second electrical device includes at least one of charger 52 or electric water heater 53.
As a result, in power management system 1 including household appliance 51 and at least one of charger 52 and electric water heater 53, the amounts of purchased electricity for charger 52 and electric water heater 53 can be accurately calculated.

[Invention 14]

Power management system 1 according to any one of Inventions 1 to 13 further includes a third obtainer (for example, obtainer 71) that obtains a fourth power value measured, from a fourth meter (for example, power meter 44) that measures electricity supplied from one of the distributed energy resource and the first electrical device to the other. Calculator 72 further calculates at least one of the amount of purchased electricity or the amount of sold electricity based on the fourth power value.

As a result, the fourth power value is used and thus, when a PPA operator has installed the distributed energy resource, at least one of the amount of purchased electricity and the amount of sold electricity can be accurately calculated.

[Invention 15]

In power management system 1 according to any one of Inventions 1 to 14, the calculator calculates both the amount of purchased electricity and the amount of sold electricity based on the smaller power value that is one of the first power value and the second power value.

This allows power management system 1 to accurately calculate both the amount of purchased electricity and the amount of sold electricity.

[Invention 16]

A power management method for power management system 1 to perform management regarding electricity for a first electrical device (for example, household appliance 51) and a second electrical device (for example, charger 52) where different unit prices are set for first purchased electricity supplied to the first electrical device and second purchased electricity supplied to the second electrical device includes: (S11) obtaining, from a first meter (for example, power meter 41) to which a distributed energy resource (for example, photovoltaic cell 10) and the first electrical device are electrically connected, a first power value that is a measured value of exported electricity flowing from the distributed energy resource to power system 300; (S12) obtaining, from a second meter (for example, power meter 42) electrically connected to the second electrical device, a second power value that is a measured value of imported electricity flowing from power system 300; and (S13) calculating at least one of an amount of purchased electricity or an amount of sold electricity based on a smaller power value among the first power value and the second power value, the purchased electricity being electricity purchased from power system 300, the sold electricity being electricity sold to power system 300.

[Invention 17]

A program causes a computer to perform the power management method according to Invention 16.

This produces substantially the same advantageous effects as those produced by power management system 1 described above.

Note that these general and specific aspects may be implemented using a system, a method, an integrated circuit, a computer program, or a non-transitory computer-readable recording medium such as compact disc read-only memory (CD-ROM), or any combination of systems, methods, integrated circuits, computer programs, and recording media. The program may be recorded on the recording medium in advance or may be supplied to the recording medium via a wide-area communication network such as the Internet.

[Other Embodiments]

The power management system, etc., according to one or more aspects has been described thus far based on the embodiment and the like, but the present invention is not limited to this embodiment and the like. Various modifications to the present embodiment and forms configured by combining structural elements in different embodiments that can be conceived by those skilled in the art may be included within the present invention as long as these do not depart from the essence of the present invention.

For example, the above embodiment and the like have described photovoltaic cell 10 (a photovoltaic generation device) as an example of the distributed energy resource, but this is not limiting; the distributed energy resource may be, for example, one of a wind power generation device, a hydroelectric power generation device, a geothermal power generation device, and a biomass power generation device or any combination thereof.

Furthermore, the above embodiment and the like have described an example where a conventional pricing system is applied to the first electrical device that is a power load that is directly linked to the real-life power demand and a dynamic pricing system is applied to the second electrical device that is a power load that is not directly linked to the real-life power demand, but this is not limiting; for example, a dynamic pricing system may be applied to the first electrical device and a normal pricing system may be applied to the second electrical device. At least one of the electrical device subject to a conventional pricing system and the electrical device subject to a dynamic pricing system may include both the first electrical device and the second electrical device.

Furthermore, the above embodiment and the like have described an example where a dynamic pricing system is applied to the second electrical device, but this is not limiting; other pricing systems in which the electricity rate varies depending on the situation may be applied.

Furthermore, in the above embodiment and the like, the power capacity agreed in the contact between the home and the retail electric provider may be high-voltage power (for example, greater than 60 A, 50 kW or more and less than 2,000 kW) or may be low-voltage power (for example, 60 A or less, less than 50 kW). One of the low-voltage power and the high-voltage power is supplied to both the first electrical device and the second electrical device. Specifically, the low-voltage power is supplied to each of the first electrical device and the second electrical device or the high-voltage power is supplied to each of the first electrical device and the second electrical device.

Furthermore, the above embodiment and the like have described an example where management device 70 calculates both the amount of purchased electricity and the amount of sold electricity, but management device 70 may calculate, for example, only one of the amount of purchased electricity and the amount of sold electricity.

The sequence in which the steps in the flowchart are executed is given as an example to describe the present invention in specific terms, and thus other sequences are possible. Moreover, part of the above-described steps may be executed simultaneously (in parallel) with another step, or part of the above-described steps may be excluded.

Furthermore, the separation of the function blocks in the block diagrams is merely an example, and two or more function blocks may be implemented as a single function block, a single function block may be separated into plural function blocks, or part of functions of a function block may be transferred to another function block. Moreover, the functions of function blocks having similar functions may be processed, in parallel or by time-division, by a single hardware or software product.

Furthermore, the management device according to the above embodiment and the like may be implemented as a single device or may be implemented as two or more devices. When the management device is implemented by two or more devices, the structural elements included in the management device may be allocated to the two or more devices in any way. When the management device is implemented by two or more devices, the method for communication between the two or more devices is not particularly limited and may be wireless or wired communication. Furthermore, wireless communication and wired communication may be combined between the two or more devices.

Furthermore, the structural elements described in the above embodiment may each be implemented as software or may typically be implemented as large-scale integration (LSI), which is an integrated circuit. These may be made as individual chips or as a single chip to include a part or all thereof. Although LSI is mentioned here, there are instances where the integrated circuit is called IC, system LSI, super LSI, and ultra LSI, depending on the level of integration. Furthermore, the method of circuit integration is not limited to LSI, and implementation through a dedicated circuit (a general-purpose circuit that executes a dedicated program) or a general-purpose processor is also possible. A field programmable gate array (FPGA) which allows programming after LSI manufacturing or a reconfigurable processor which allows reconfiguration of the connections and settings of the circuit cells inside the LSI may also be used. In addition, depending on the emergence of circuit integration technology that replaces LSI due to progress in semiconductor technology or other derivative technology, it is obvious that such technology may be used to integrate the structural elements.

A system LSI is a super-multifunction LSI manufactured with a plurality of components integrated on a single chip, and is specifically a computer system configured of a microprocessor, read only memory (ROM), and random access memory (RAM), for example. A computer program is stored in the ROM. The system LSI achieves its function as a result of the microprocessor operating according to the computer program.

Furthermore, an aspect of the present invention may also be a computer program that causes a computer to execute the respective characteristic steps included in the power management method illustrated in FIG. 3.

Furthermore, for example, the program may be a program to be executed by a computer. Moreover, an aspect of the present invention may be a non-transitory computer-readable recording medium having said program recorded thereon. For example, said program may be recorded on a recording medium and be distributed or circulated. For example, by installing the distributed program on a device including another processor and causing the processor to execute the program, it is possible to cause the device to perform the above-described processes.

[Reference Signs List]

1 power management system
10 photovoltaic cell (distributed energy resource)
41, 201, 441 power meter (first meter)

42, 202, 442 power meter (second meter)
44 power meter (fourth meter)
51 household appliance (first electrical device)
51a air conditioner (first electrical device)
52 charger (second electrical device)
53 electric water heater (second electrical device)
71 obtainer (first obtainer, second obtainer, and third obtainer)
72 calculator
80, 80a distribution board
90, 90a specific meter board
95 switch
200 power meter (third meter)
300 power system

**Claims**

1. A power management system that performs management regarding electricity for a first electrical device and a second electrical device,

   the first electrical device being supplied with first purchased electricity, the second electrical device being supplied with second purchased electricity, the first purchased electricity and the second purchased electricity being electricity for which different unit prices are set,
   the power management system comprising:

   a first obtainer that obtains, from a first meter to which a distributed energy resource and the first electrical device are electrically connected, a first power value that is a measured value of exported electricity flowing from the distributed energy resource to a power system;
   a second obtainer that obtains, from a second meter electrically connected to the second electrical device, a second power value that is a measured value of imported electricity flowing from the power system; and
   a calculator that calculates at least one of an amount of purchased electricity or an amount of sold electricity based on a smaller power value among the first power value and the second power value, the purchased electricity being electricity purchased from the power system, the sold electricity being electricity sold to the power system.

2. The power management system according to claim 1, wherein
   the calculator calculates the smaller power value as first self-consumed electricity and subtracts the first self-consumed electricity from the first power value and the second power value to calculate at least one of the amount of purchased electricity or the amount of sold electricity, the first self-consumed electricity being provided from the distributed energy resource to the second electrical device.

3. The power management system according to claim 2, wherein
   the calculator switches, according to an electricity rate for the second purchased electricity, a method for calculating the first self-consumed electricity.

4. The power management system according to claim 3, wherein
   when the electricity rate for the second purchased electricity is higher than or equal to a predetermined unit price, the calculator calculates the smaller power value as the first self-consumed electricity, and when the electricity rate for the second purchased electricity is lower than the predetermined unit price, the calculator calculates a power value less than the smaller power value as the first self-consumed electricity.

5. The power management system according to claim 4, wherein
   when the electricity rate for the second purchased electricity is lower than the predetermined unit price, the calculator sets the first self-consumed electricity to zero or calculates the first self-consumed electricity based on second self-consumed electricity that is provided from the distributed energy resource to the first electrical device.

6. The power management system according to any one of claims 1 to 5, further comprising:

the first meter; and
the second meter, wherein
each of the first meter and the second meter is a smart meter.

7. The power management system according to any one of claims 2 to 5, further comprising:

the first meter;
the second meter; and
a third meter that is connected between the power system and each of the first meter and the second meter and measures at least one of a third power value of imported electricity flowing from the power system or a fourth power value of exported electricity flowing from the distributed energy resource to the power system, wherein the first meter and the second meter are provided on a distribution board to which the first electrical device and the second electrical device are connected, and
the third meter is connected between the distribution board and the power system.

8. The power management system according to claim 7, wherein

the third meter measures at least the third power value, and
the calculator calculates the first purchased electricity by subtracting the second power value from the third power value.

9. The power management system according to any one of claims 1 to 5, further comprising:

the first meter;
the second meter;
a third meter that is connected between the power system and each of the first meter and the second meter and measures a third power value of imported electricity flowing from the power system; and
a specific meter board to which the distributed energy resource and the second electrical device are connected, the specific meter board being connected between the third meter and a distribution board to which the first electrical device is connected, wherein
the first meter and the second meter are provided on the specific meter board, and
the third meter is connected between the specific meter board and the power system.

10. The power management system according to claim 9, further comprising:
a switch that switches between connecting the distributed energy resource to the first meter and the first electrical device and connecting the distributed energy resource to the second meter and the second electrical device.

11. The power management system according to claim 10, wherein
when an electricity rate for the second purchased electricity is higher than or equal to a predetermined unit price, the switch connects the distributed energy resource to the first meter and the first electrical device, and when the electricity rate for the second purchased electricity is lower than the predetermined unit price, the switch connects the distributed energy resource to the second meter and the second electrical device.

12. The power management system according to any one of claims 1 to 5, wherein

an electricity rate for the first purchased electricity is a fixed electricity rate that is set in advance, and
an electricity rate for the second purchased electricity is an electricity rate based on dynamic pricing.

13. The power management system according to any one of claims 1 to 5, wherein

the first electrical device includes a household appliance, and
the second electrical device includes at least one of a charger or an electric water heater.

14. The power management system according to any one of claims 1 to 5, further comprising:

a third obtainer that obtains a fourth power value measured, from a fourth meter that measures electricity supplied from one of the distributed energy resource or the first electrical device to a remaining one of the distributed energy resource or the first electrical device, wherein

the calculator further calculates at least one of the amount of purchased electricity or the amount of sold electricity based on the fourth power value.

15. The power management system according to any one of claims 1 to 5, wherein
the calculator calculates both the amount of purchased electricity and the amount of sold electricity based on the smaller power value among the first power value and the second power value.

16. A power management method for a power management system to perform management regarding electricity for a first electrical device and a second electrical device,

the first electrical device being supplied with first purchased electricity, the second electrical device being supplied with second purchased electricity, the first purchased electricity and the second purchased electricity being electricity for which different unit prices are set,
the power management method comprising:

obtaining, from a first meter to which a distributed energy resource and the first electrical device are electrically connected, a first power value that is a measured value of exported electricity flowing from the distributed energy resource to a power system;
obtaining, from a second meter electrically connected to the second electrical device, a second power value that is a measured value of imported electricity flowing from the power system; and
calculating at least one of an amount of purchased electricity or an amount of sold electricity based on a smaller power value among the first power value and the second power value, the purchased electricity being electricity purchased from the power system, the sold electricity being electricity sold to the power system.

17. A program for causing a computer to perform the power management method according to claim 16.

FIG. 1

Power system 300

M0 200

W1_b

W1_s

CT1 61

M1 41

Y = Min(W1_s, W2_b)

PV 10

PCS 20

SB 30

Household appliance 51

Home 100

CT2 62

W2_b

M2 42

Management device 70

Charger 52

1

# FIG. 2

70

Management device

71

Obtainer

72

Calculator

73

Output unit

# FIG. 3

Start

Obtain first power value — S11

Obtain second power value — S12

Calculate amount of purchased electricity and amount of sold electricity — S13

Output amount of purchased electricity and amount of sold electricity — S14

End

# FIG. 4

FIG. 5

# FIG. 6

FIG. 7

EP 4 753 094 A1

FIG. 8

# FIG. 9

Y2 = Min(PV-Y1, W2_b)

200 — M0

201 — M1

202 — M2

PV power, W0_b

Y1 = Min(PV power, W1_b)

W1_b
Purchased electricity
(fixed-rate electricity)
= W1_b-Y1

W2_b
Purchased electricity
(DP-rate electricity)
= W2_b-Y1

10 — PV

20 — PCS

30 — SB

80

51a

Charger — 52

V10

EP 4 753 094 A1

FIG. 10

FIG. 11

FIG. 12

EP 4 753 094 A1

# FIG. 13

## INTERNATIONAL SEARCH REPORT

| International application No. |
|---|
| **PCT/JP2024/026207** |

### A. CLASSIFICATION OF SUBJECT MATTER

*H02J 3/00*(2006.01)i; *H02J 3/32*(2006.01)i; *H02J 3/38*(2006.01)i; *H02J 13/00*(2006.01)i
FI:  H02J3/00 170; H02J3/00 180; H02J3/38 110; H02J3/32; H02J3/38 130; H02J13/00 301A

According to International Patent Classification (IPC) or to both national classification and IPC

### B. FIELDS SEARCHED

Minimum documentation searched (classification system followed by classification symbols)

H02J3/00; H02J3/32; H02J3/38; H02J13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-085531 A (TOYOTA JIDOSHA KABUSHIKI KAISHA) 19 May 2016 (2016-05-19) entire text, all drawings | 1-17 |
| A | JP 2023-103026 A (KOTOBUKU L.L.C.) 26 July 2023 (2023-07-26) entire text, all drawings | 1-17 |
| A | JP 2021-145533 A (SUMITOMO ELECTRIC INDUSTRIES, LTD.) 24 September 2021 (2021-09-24) entire text, all drawings | 1-17 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/026207**

| Patent document cited in search report | | | Publication date (day/month/year) | Patent family member(s) | | | Publication date (day/month/year) |
|---|---|---|---|---|---|---|---|
| JP | 2016-085531 | A | 19 May 2016 | US | 2017/0345107 | A1 | |
| | | | | entire text, all drawings | | | |
| | | | | WO | 2016/063734 | A1 | |
| | | | | CN | 107077705 | A | |
| JP | 2023-103026 | A | 26 July 2023 | (Family: none) | | | |
| JP | 2021-145533 | A | 24 September 2021 | (Family: none) | | | |

Form PCT/ISA/210 (patent family annex) (July 2022)